# FASCICULE DE BREVET EUROPEEN

(11) **EP 3 104 232 B1**
(45) Date de publication et mention de la délivrance du brevet: **29.11.2017**
(21) Numéro de dépôt: 15171705.5
(22) Date de dépôt: 11.06.2015
(51) Int. Cl.: G04B 5/08, G04B 5/14, G04B 11/00

(54) **INVERSEUR D HORLOGERIE ET MONTRE À REMONTAGE AUTOMATIQUE EN COMPORTANT APPLICATION**
WENDEGETRIEBE FÜR UHR, UND ARMBANDUHR MIT AUTOMATISCHEM AUFZUG, IN DER ES ANWENDUNG FINDET
TIMEPIECE REVERSER AND SELF-WINDING WATCH COMPRISING SAME

(43) Date de publication de la demande: 14.12.2016
(73) Titulaire: Société anonyme de la Manufacture d'Horlogerie Audemars Piguet & Cie, 1348 Le Brassus (CH)
(72) Inventeur: Kirchhof, Jérôme, 2000 Neuchâtel (CH)
(74) Mandataire: BOVARD AG

(56) Documents cités:
- DE-A1- 2 326 915
- DE-C- 952 879
- US-A1- 2004 130 972
- HUMBERT B: "La montre Suisse à remontage automatique", JOURNAL SUISSE D'HORLOGERIE ET DE BIJOUTERIE, SCRIPTAR S.A. LAUSANNE, CH, vol. 90, no. 5, 1 septembre 1965 (1965-09-01), pages 677-685, XP002116522, ISSN: 0368-4172

## Description

### Domaine technique de l'invention

La présente invention se rapporte au domaine de l'horlogerie. Plus précisément, elle concerne un inverseur d'horlogerie et une montre à remontage automatique comportant cet inverseur.

### État de la technique

Le brevet allemand DE-952 879 publié en 1956 décrit un dispositif à roue libre pour montre à remontage automatique. Ce dispositif comprend deux roues d'entrée entraînées par une roue de remontage. Chacune de ces roues d'entrée est solidaire d'un pignon, autour duquel peut se déplacer un pignon satellite formant un cliquet porté par une roue inférieure. Les deux roues inférieures engrènent l'une avec l'autre. L'une d'elles est solidaire d'une roue de sortie. Lorsque la roue de remontage tourne dans un premier sens, l'entraînement est transmis jusqu'à la roue de sortie par une première roue d'entrée, un premier pignon, un premier satellite et une première roue inférieure, qui engrène avec une seconde roue inférieure solidaire de la roue de sortie. Lorsque la roue de remontage tourne dans un deuxième sens contraire au premier sens, l'entraînement est transmis jusqu'à la roue de sortie par une seconde roue d'entrée, un second pignon et un second satellite que porte la seconde roue inférieure solidaire de la roue de sortie.

Le brevet français FR-1 079 576 publié en 1954 propose un dispositif de remontage automatique pour mécanisme d'horlogerie. Dans ce dispositif, une roue de remontage porte un premier pignon satellite formant un cliquet. Cette roue de remontage engrène avec une roue qui porte un deuxième pignon satellite formant un cliquet. Le mouvement de la roue de remontage peut avoir deux sens. Selon son sens, il est transmis d'une première manière ou d'une deuxième manière jusqu'à une roue de sortie. Plus précisément, lorsque la roue de remontage tourne dans un premier sens, le premier pignon satellite entraîne un premier pignon de sortie. Lorsque la roue de remontage tourne dans deuxième sens contraire au premier sens, le deuxième pignon satellite entraîne un deuxième pignon de sortie. Une même roue en sortie reçoit soit l'entraînement du premier pignon de sortie, soit l'entraînement du deuxième pignon de sortie.

Le dispositifs des documents précités DE-952 879 et FR-1 079 576 présentent notamment l'inconvénient d'occuper beaucoup de place et il semble que malgré les près de 60 ans qui se sont écoulés depuis leur publication, personne n'est parvenu jusqu'à ce jour à résoudre ce problème d'encombrement de manière satisfaisante.

Des inverseurs avec deux roues d'armage coaxiales sont connus du document US2004130972 et de l'article B. Humbert "La montre Suisse à remontage automatique", JOURNAL SUISSE D'HORLOGERIE ET DE BIJOUTERIE, SCRIPTAR S.A. LAUSANNE, CH, Vol. 90, Nr. 5, pages 677-685, 1965.

### Résumé de l'invention

Un inverseur d'horlogerie de taille sensiblement réduite a été imaginé et constitue l'invention.

L'inverseur d'horlogerie selon l'invention comporte :
- une première roue d'entrée rotative autour d'un axe de rotation, dans un premier sens de rotation et dans un deuxième sens de rotation contraire au premier sens de rotation,
- au moins un premier pignon satellite porté par la première roue d'entrée, et
- un mobile de sortie comprenant un premier rochet avec lequel le premier pignon satellite forme un encliquetage verrouillant en rotation le mobile de sortie par rapport à la première roue d'entrée seulement dans le premier sens de rotation parmi les premier et deuxième sens de rotation,
- une deuxième roue d'entrée qui a le même axe de rotation que la première roue d'entrée et que le mobile de sortie, et
- au moins un deuxième pignon satellite et un deuxième rochet qui forment ensemble un encliquetage verrouillant en rotation le mobile de sortie par rapport à la deuxième roue d'entrée seulement dans le premier sens de rotation parmi les premier et deuxième sens de rotation.

L'inverseur d'horlogerie selon l'invention présente l'avantage de pouvoir posséder une constitution simple. Il possède un autre avantage, qui est que la première roue d'entrée, la deuxième roue d'entrée, les pignons satellites et le mobile de sortie peuvent former ensemble un sous-ensemble qui peut être préassemblé et dont les constituants peuvent se maintenir eux-mêmes assemblés.

L'inverseur d'horloger défini ci-dessus peut incorporer une ou plusieurs autres caractéristiques avantageuses, isolément ou en combinaison, en particulier parmi celles définies ci-après.

Avantageusement, la deuxième roue d'entrée porte le deuxième pignon satellite, le mobile de sortie comprenant le deuxième rochet qui est solidaire du premier rochet. Lorsque tel est le cas, le deuxième pignon satellite tourne sur lui-même mais pas autour du deuxième rochet lorsque le mobile de sortie est entraîné en rotation depuis l'aval, par exemple depuis un arbre de barillet du fait d'un armage manuel, dans le cas où un rouage relie cinématiquement cet arbre de barillet au mobile de sortie.

Avantageusement, la première et la deuxième roue d'entrée sont montées de manière rotative sur le mobile de sortie. Lorsque tel est le cas, l'inverseur peut posséder une constitution simple et/ou un encombrement réduit.

Avantageusement, le mobile de sortie comporte au moins un épaulement de retenue, cet épaulement de retenue et le premier rochet retenant axialement la première roue d'entrée entre eux. Lorsque tel est le cas, le premier rochet remplit une fonction de retenue en plus de sa fonction de rochet, ce qui peut se traduire par une simplification.

Avantageusement, le mobile de sortie comporte un arbre d'assemblage et au moins une bague d'assemblage qui est enfilée sur cet arbre d'assemblage et qui supporte le premier rochet de manière à solidariser ce premier rochet à l'arbre d'assemblage, la première roue d'entrée étant montée de manière rotative sur la bague d'assemblage qui comprend l'épaulement de retenue. Lorsqu'il en est ainsi, l'assemblage de l'inverseur et/ou la fabrication de certains au moins de ses constituants peuvent être simplifiées.

Avantageusement, le mobile de sortie comporte un arbre d'assemblage sur lequel au moins la première roue d'entrée, la deuxième roue d'entrée et le premier rochet sont enfilés. Lorsqu'il en est ainsi, l'assemblage de l'inverseur et/ou la fabrication de certains au moins de ses constituants peuvent être simplifiées.

Avantageusement, les premier et deuxième pignons satellites se trouvent entre la première roue d'entrée et la deuxième roue d'entrée. Lorsque tel est le cas, les pignons satellites sont protégés par les première et deuxième roues d'entrées.

Avantageusement, l'inverseur d'horlogerie comporte une plaque de séparation se trouvant entre une trajectoire circulaire du premier pignon satellite et une trajectoire circulaire du deuxième pignon satellite. Une telle plaque de séparation ainsi disposée peut empêcher un accrochage malencontreux entre les premier et deuxième pignons satellites. Elle peut aussi simplifier la constitution de l'inverseur et/ou en réduire l'épaisseur, en servant à retenir axialement au moins l'un des pignons satellites d'un côté.

Avantageusement, le premier rochet possède une denture externe d'encliquetage, le deuxième rochet possédant une denture externe d'encliquetage.

Avantageusement, l'inverseur d'horlogerie comporte plusieurs premiers pignons satellites à même de coopérer avec le premier rochet de manière à verrouiller en rotation le mobile de sortie par rapport à la première roue d'entrée seulement dans le premier sens de rotation. Lorsqu'il en est ainsi, le chemin perdu lors d'une inversion du sens d'entraînement en entrée peut être réduit. De plus, l'accouplement réalisé par les premiers pignons satellites est réparti en plusieurs points. En outre, les premiers pignons satellites peuvent être disposés de manière que le centre de gravité de l'ensemble de leurs masses individuelles soit au moins approximativement centré.

L'invention a également pour objet une montre à remontage automatique, caractérisée en ce qu'elle comprend un inverseur d'horlogerie tel que défini précédemment.

La montre à remontage automatique définie ci-dessus peut incorporer une ou plusieurs autres caractéristiques avantageuses, isolément ou en combinaison, en particulier parmi celles définies ci-après.

Avantageusement, la montre à remontage automatique comprend un rouage d'entraînement des première et deuxième roues d'entrée en rotation dans des sens contraires.

### Description sommaire des dessins

D'autres avantages et caractéristiques ressortiront plus clairement de la description qui va suivre d'un mode particulier de réalisation de l'invention donné à titre d'exemple non limitatif et représenté aux dessins annexés, parmi lesquels :
- la figure 1 est un schéma synoptique illustrant le principe de fonctionnement d'un inverseur ;
- la figure 2 est une vue en perspective d'un inverseur selon un mode de réalisation de l'invention et d'un mobile de réduction associé à cet inverseur au sein d'un mécanisme pour transmettre un mouvement de remontage et pour inverser ou non ce mouvement de remontage selon son sens ;
- la figure 3 est une vue en perspective qui représente le même mécanisme que la figure 2 et qui se distingue de cette figure 2 uniquement en ce qu'elle illustre un mode de fonctionnement différent ;
- la figure 4a est une vue en perspective de l'inverseur visible aux figures 2 et 3 ;
- la figure 4b est une vue en perspective et en coupe transversale, qui représente une portion de l'inverseur des figures 2, 3 et 4a ;
- la figure 4c est une autre vue en perspective et en coupe transversale, qui représente une portion de l'inverseur des figures 2, 3, 4a et 4b;
- la figure 5 est une vue en coupe axiale de l'inverseur visible aux figures 2, 3, 4a, 4b, 4c, et illustre un premier mode de fonctionnement de cet inverseur ;
- les figures 6 et 7 sont deux vues des détails qui illustrent comment un encliquetage présent en plusieurs exemplaires dans l'inverseur des figures 2, 3, 4a, 4b, 4c et 5 fonctionne en fonction du sens de rotation d'un pignon satellite de cet encliquetage ;
- la figure 8 est une vue en coupe axiale qui est identique à la figure 5 sauf qu'elle illustre un deuxième mode de fonctionnement de l'inverseur des figures 2, 3, 4a, 4b, 4c et 5 ; et
- les figures 9 à 14 sont des vues de détail, en coupe axiale, dont chacune représente l'une de plusieurs variantes possibles de montage d'un pignon satellite de l'inverseur des figures 2, 3, 4a, 4b, 4c, 5 et 8.

### Description d'un mode préférentiel de l'invention

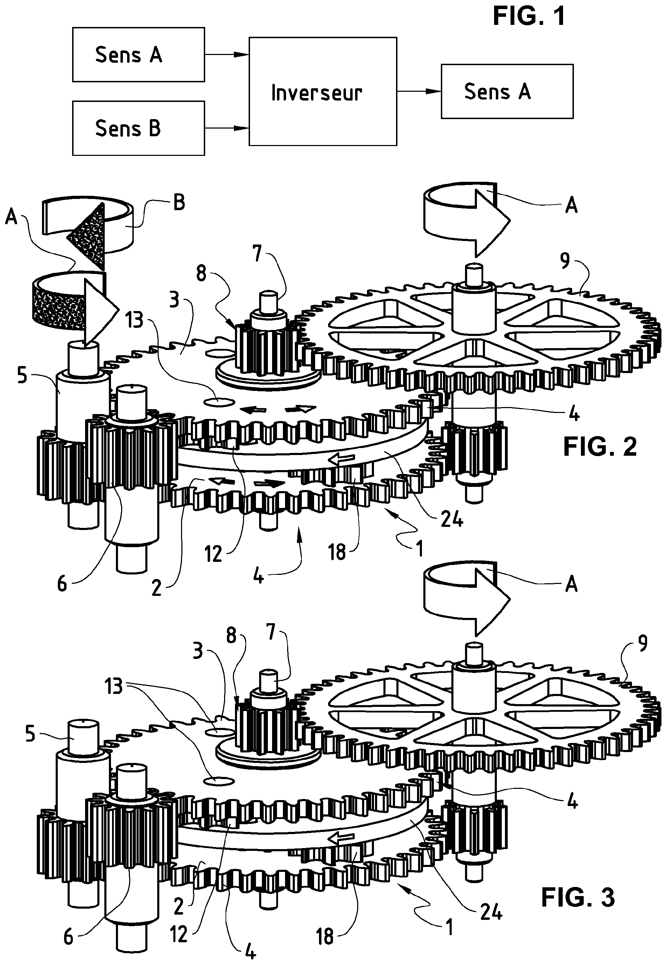

Au sens où on l'entend ici et dans les revendications annexées, un « inverseur » est un mécanisme qui transmet un mouvement de rotation en inversant ou non ce mouvement de rotation selon son sens en entrée de l'inverseur, ce qu'illustre la figure 1. Sur cette figure 1, le sens A et le sens B sont deux sens de rotation contraires que peut posséder un entraînement reçu par un inverseur. Cet inverseur transmet un mouvement de rotation de sens A sans l'inverser. L'inverseur inverse un mouvement de rotation de sens B lorsqu'il transmet ce mouvement de rotation. Le mouvement de rotation en sortie de l'inverseur a donc toujours le sens A.

Sur les figures 2 et 3, un inverseur 1 conforme à l'invention est à même de produire la fonction illustrée à la figue 1. Cet inverseur 1 comporte une première roue d'entrée 2 et une deuxième roue d'entrée 3, dont chacune possède une denture périphérique d'entrée 4.

En amont des roues d'entrée 2 et 3, un pignon d'entrée 5 et un pignon de renvoi 6 forment un rouage prévu pour entraîner les roues d'entrée 2 et 3 en rotation dans des sens opposés. Le pignon d'entrée 5 engrène avec la première roue d'entrée 2 et avec le pignon de renvoi 6, qui engrène lui-même avec la deuxième roue d'entrée 3.

Un mobile de sortie 7 de l'inverseur 1 comporte une denture de sortie 8 engrenant avec la denture d'une roue constitutive d'un mobile de réduction 9 se trouvant en sortie de l'inverseur 1.

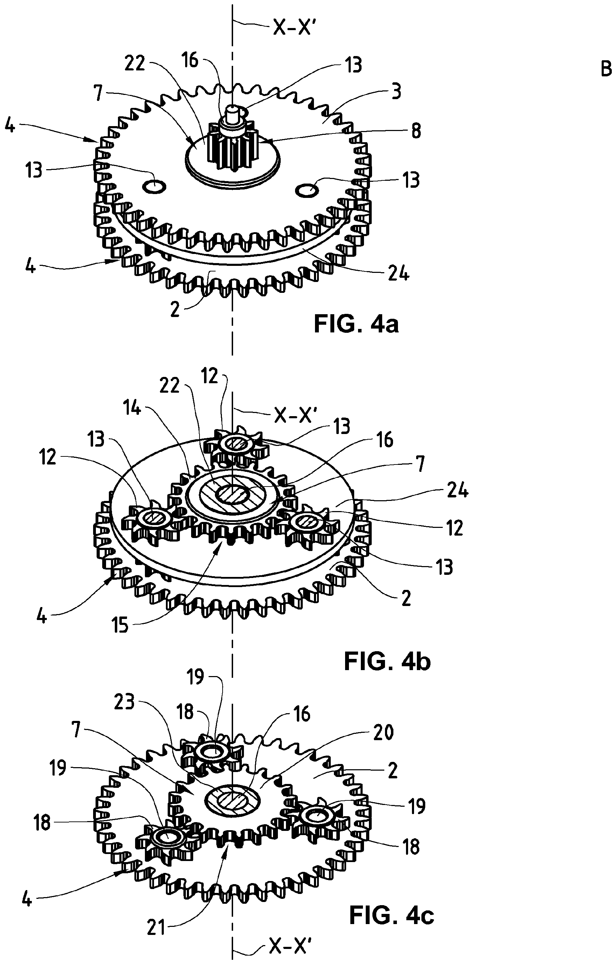

Ainsi qu'on peut le voir sur la figure 4a, la première roue d'entrée 2, la deuxième roue d'entrée 3 et le mobile de sortie 7 sont coaxiaux en ayant le même axe de rotation X-X'.

La deuxième roue d'entrée 3 porte plusieurs pignons satellites 12, qui sont visibles à la figure 4b. Dans l'exemple représenté, ces pignons satellites 12 sont au nombre de trois. Il peut également y en avoir plus comme il peut y en avoir moins. Par exemple, il peut n'y avoir qu'un seul pignon satellite 12. Chaque pignon satellite 12 est monté rotatif sur un arbre 13, qui est solidaire de la deuxième roue d'entrée 3 en étant emmanché à force dans un trou de celle-ci. Chaque pignon satellite 12 remplit la fonction d'un cliquet et il est en prise avec la denture d'encliquetage 15 d'un rochet 14, qui fait partie du mobile de sortie 7 en étant solidaire d'un arbre d'assemblage 16 constitutif de ce mobile de sortie 7. Les pignons satellites 12 et le rochet 14 forment ensemble un encliquetage accouplant en rotation le mobile de sortie 7 à la deuxième roue d'entrée 3 seulement dans un sens. En effet, un accouplement s'effectuant de manière que la deuxième roue d'entrée 3 puisse entraîner en rotation le mobile de sortie 7 se produit lors d'une rotation de la deuxième roue d'entrée 3 dans l'un de ses deux sens de rotation, mais n'a pas lieu lors d'une rotation de cette deuxième roue d'entrée 3 dans son autre sens de rotation.

La première roue d'entrée 2 porte plusieurs pignons satellites 18, qui sont visibles à la figure 4c. Dans l'exemple représenté, ces pignons satellites 18 sont au nombre de trois. Il peut également y en avoir plus comme il peut y en avoir moins. Par exemple, il peut n'y avoir qu'un seul pignon satellite 18. Chaque pignon satellite 18 est monté rotatif sur un arbre 19, qui est solidaire de la première roue d'entrée 2 en étant emmanché à force dans un trou de celle-ci. Chaque pignon satellite 18 remplit la fonction d'un cliquet et il est en prise avec la denture d'encliquetage 21 d'un rochet 20, qui fait partie du mobile de sortie 7 en étant solidaire de l'arbre d'assemblage 16. Les pignons satellites 18 et le rochet 20 forment ensemble un encliquetage accouplant en rotation le mobile de sortie 7 à la première roue d'entrée 2 seulement dans un sens. En effet, un accouplement s'effectuant de manière que la première roue d'entrée 2 puisse entraîner en rotation le mobile de sortie 7 se produit lors d'une rotation de la première roue d'entrée 2 dans l'un de ses deux sens de rotation, mais n'a pas lieu lors d'une rotation de cette première roue d'entrée 2 dans son autre sens de rotation.

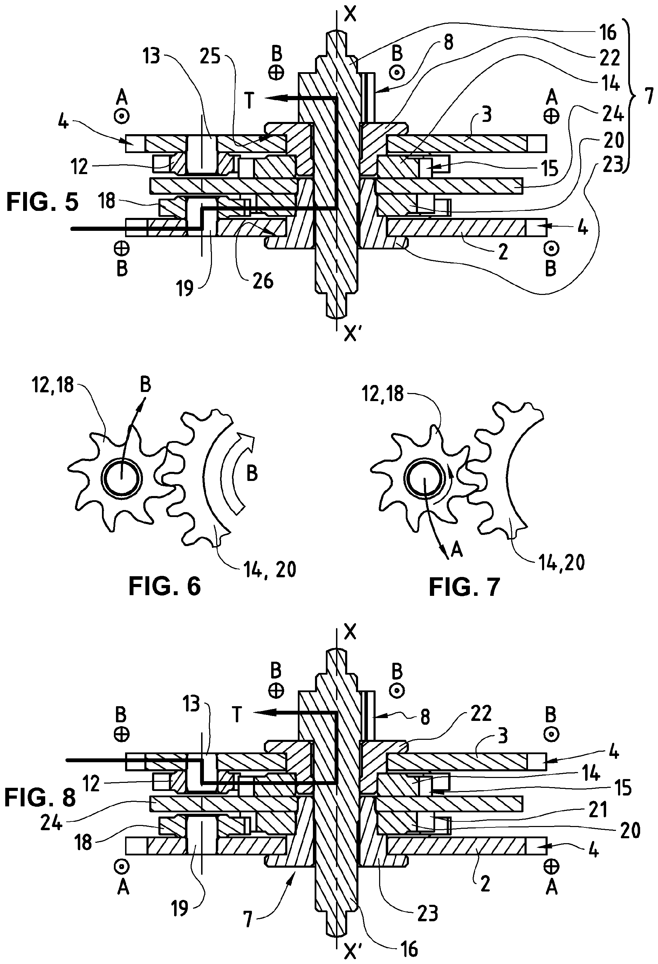

Ainsi qu'on peut le voir à la figure 5, une bague d'assemblage 22 solidarise le rochet 14 à l'arbre d'assemblage 16, lequel définit la denture de sortie 8. Une bague d'assemblage 23 solidarise le rochet 20 et une plaque de séparation 24 à l'arbre d'assemblage 16. En résumé, le mobile de sortie 7 comprend l'arbre d'assemblage 16, la bague d'assemblage 22, le rochet 14, la bague d'assemblage 23, le rochet 20 et la plaque de séparation 24, lesquels sont solidaires entre eux.

Les roues d'entrée 2 et 3 sont portées par le mobile de sortie 7 de manière à pouvoir tourner librement par rapport à ce dernier, autour de l'axe de rotation X-X'. Le rochet 14 et un épaulement de retenue 25 présent sur la bague d'assemblage 22 retiennent entre eux la deuxième roue d'entrée 3. Le rochet 20 et un épaulement de retenue 26 présent sur la bague d'assemblage 23 retiennent entre eux la première roue d'entrée 2.

Les pignons satellites 12 et 18, ainsi que les rochets 14 et 20, se trouvent entre les roues d'entrée 2 et 3. La plaque de séparation 24 sépare l'un de l'autre deux espaces aplatis, à savoir un espace où circulent les pignons satellites 12 et un espace où circulent les pignons satellites 18. La plaque de séparation 24 retient axialement les pignons satellites 12 et 18 d'un côté et les empêche ainsi de s'échapper des arbres 13 et 19 qui les supportent.

Le sous-ensemble de la figure 5 est compact et d'un faible encombrement. Ses différents constituants se maintiennent eux-mêmes assemblés. Le sous-ensemble de la figure 5 peut être préassemblé avant d'être intégré au mouvement d'une montre.

Les figures 6 et 7 illustrent le fonctionnement des encliquetages susmentionnés. Les dents des pignons satellites 12 sont asymétriques. Lorsqu'un pignon satellite 12 tourne dans le sens B autour de l'axe de rotation X-X', il s'accouple à la denture du rochet 14 sans pouvoir tourner sur lui-même et, de ce fait, entraîne avec lui ce rochet 14 en rotation, ce qu'illustre la figure 6. Sur la figure 7, un pignon satellite 12 tourne dans le sens A contraire au sens B, autour de l'axe de rotation X-X'. Lorsque tel est le cas, ce pignon satellite 12 tourne sur lui-même sans en être empêché par la denture du rochet 14, et sans entraîner avec lui ce rochet 14 autour de l'axe de rotation X-X'.

Ce qui précède au sujet du comportement des pignons satellites 12 vis-à-vis du rochet 14 vaut pour le comportement des pignons satellites 18 vis-à-vis du rochet 20.

On se réfère de nouveau à la figure 2. Lorsque le pignon d'entrée 5 est entraîné dans le sens A, il entraîne la première roue d'entrée 2 dans le sens B et l'inverseur 1 a le fonctionnement illustré à la figure 5, où la flèche T symbolise la transmission du couple d'entraînement lors de ce fonctionnement. Sur cette figure 5, les pignons satellites 18 sont entraînés dans le sens B autour de l'axe de rotation X-X' et ils sont verrouillés par rapport au rochet 20 qu'ils entraînent avec eux dans ce sens B, si bien que le mobile de sortie 7 tourne également dans le sens B. Le mobile de réduction 9 tourne alors dans le sens A.

On se réfère encore à la figure 2. Lorsque le pignon d'entrée 5 est entraîné dans le sens B, il entraîne le pignon de renvoi 6 dans le sens A. Ce pignon de renvoi 6 entraîne à son tour la deuxième roue d'entrée 3, qui tourne dans le sens B. L'inverseur 1 a alors le fonctionnement illustré à la figure 8, où la flèche T symbolise la transmission du couple d'entraînement lors de ce fonctionnement. Sur cette figure 8, les pignons satellites 12 sont entraînés dans le sens B autour de l'axe de rotation X-X' et ils sont verrouillés par rapport au rochet 14 qu'ils entraînent avec eux dans ce sens B, si bien que le mobile de sortie 7 tourne également dans le sens B. Le mobile de réduction 9 tourne alors dans le sens A.

En conclusion, le mobile de réduction 9 tourne dans le sens A à la fois lorsque le pignon d'entrée 5 est entraîné dans le sens A et lorsque ce pignon d'entrée 5 est entraîné dans le sens B.

L'inverseur 1 peut notamment servir à un remontage automatique, c'est-à-dire à l'armage d'un ressort de barillet d'un barillet (non représenté) d'une montre à partir des mouvements d'une masselotte (non représentée) entraînée par son propre poids lorsque l'orientation de la montre est modifiée. La masselotte entraîne le pignon d'entrée 5 parfois dans le sens A et parfois dans le sens B. Lorsque cette masselotte se déplace, le mobile de réduction 9 est toujours entraîné dans le sens A et, de ce fait, il entraîne l'arbre de barillet du barillet toujours dans le sens d'armage, quel que soit le sens du mouvement de la masselotte.

La figure 3 illustre ce qui se produit lorsque le ressort de barillet du barillet est armé manuellement et non à partir des mouvements de la masselotte. Sur cette figure 3, le mobile de réduction 9 est entraîné dans le sens A depuis l'arbre de barillet, tandis que le pignon d'entrée 5 est immobile. Les pignons satellites 12 et les pignons satellites 18 tournent alors sur eux-mêmes, mais ils ne tournent pas autour de l'axe de rotation X-X', ce qui est avantageux notamment en termes d'usure.

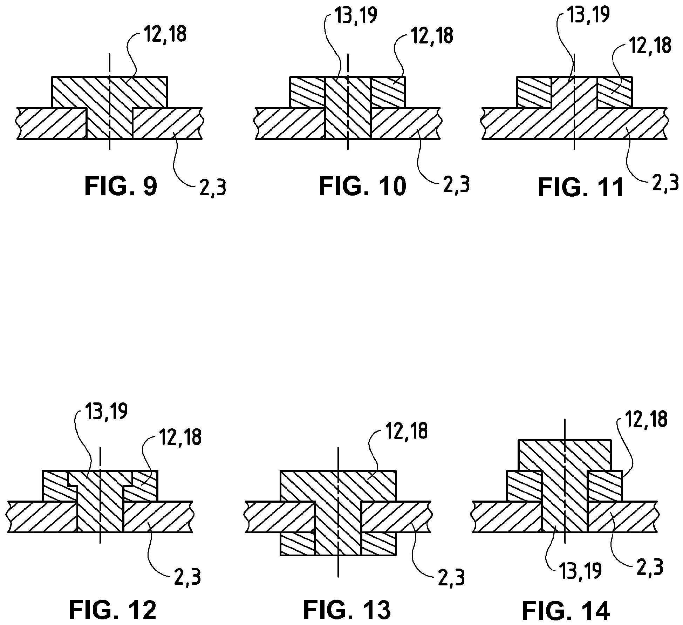

Les figures 9 à 14 représentent chacune l'un de plusieurs montages possibles des pignons satellites 12 et 18. Le montage représenté à la figure 10 est celui employé dans l'inverseur 1 de la figure 2. Dans les montages des figures 9 à 11, les pignons satellites 12 et 18 peuvent s'échapper en l'absence de la plaque de séparation 24, qui les retient axialement dans une direction lorsque l'inverseur est assemblé.

L'invention ne se limite au mode de réalisation décrit précédemment, ni aux variantes proposées plus haut. En particulier, l'une au moins des dentures d'encliquetage 15 et 21 être interne au lieu d'être externe.

## Revendications

1. Inverseur d'horlogerie, comportant :
- une première roue d'entrée (2) rotative autour d'un axe de rotation (X-X'), dans un premier sens de rotation et dans un deuxième sens de rotation contraire au premier sens de rotation,
- au moins un premier pignon satellite (18) porté par la première roue d'entrée (2),
- un mobile de sortie (7) comprenant un premier rochet (20) avec lequel le premier pignon satellite (18) forme un encliquetage verrouillant en rotation le mobile de sortie (7) par rapport à la première roue d'entrée (2) seulement dans le premier sens de rotation parmi les premier et deuxième sens de rotation,
- une deuxième roue d'entrée (3) qui a le même axe de rotation (X-X') que la première roue d'entrée (2) et que le mobile de sortie (7), et
- au moins un deuxième pignon satellite (12) et un deuxième rochet (14) qui forment ensemble un encliquetage verrouillant en rotation le mobile de sortie (7) par rapport à la deuxième roue d'entrée (3) seulement dans le premier sens de rotation parmi les premier et deuxième sens de rotation.

2. Inverseur d'horlogerie selon la revendication 1, **caractérisé en ce que** la deuxième roue d'entrée (3) porte le deuxième pignon satellite (12), le mobile de sortie (7) comprenant le deuxième rochet (14) qui est solidaire du premier rochet (20).

3. Inverseur d'horlogerie selon l'une quelconque des revendications précédentes, **caractérisé en ce que** la première (2) et la deuxième roue d'entrée (3) sont montées de manière rotative sur le mobile de sortie (7).

4. Inverseur d'horlogerie selon la revendication 3, **caractérisé en ce que** le mobile de sortie (7) comporte au moins un épaulement de retenue (26), cet épaulement de retenue (26) et le premier rochet (20) retenant axialement la première roue d'entrée (2) entre eux.

5. Inverseur d'horlogerie selon la revendication 4, **caractérisé en ce que** le mobile de sortie (7) comporte un arbre d'assemblage (16) et au moins une bague d'assemblage (23) qui est enfilée sur cet arbre d'assemblage (16) et qui supporte le premier rochet (20) de manière à solidariser ce premier rochet (20) à l'arbre d'assemblage (16), la première roue d'entrée (2) étant montée de manière rotative sur la bague d'assemblage (23) qui comprend l'épaulement de retenue (26).

6. Inverseur d'horlogerie selon l'une quelconque des revendications 3 à 5, **caractérisé en ce que** le mobile de sortie (7) comporte un arbre d'assemblage (16) sur lequel au moins la première roue d'entrée (2), la deuxième roue d'entrée (3) et le premier rochet (20) sont enfilés.

7. Inverseur selon l'une quelconque des revendications précédentes, **caractérisé en ce que** les premier et deuxième pignons satellites (12, 18) se trouvent entre la première roue d'entrée (2) et la deuxième roue d'entrée (3).

8. Inverseur d'horlogerie selon la revendication 7, **caractérisé en ce qu'**il comporte une plaque de séparation (24) se trouvant entre une trajectoire circulaire du premier pignon satellite (18) et une trajectoire circulaire du deuxième pignon satellite (12).

9. Inverseur d'horlogerie selon l'une quelconque des revendications précédentes, **caractérisé en ce qu'**il comporte plusieurs premiers pignons satellites (18) à même de coopérer avec le premier rochet (20) de manière verrouiller en rotation le mobile de sortie (7) par rapport à la première roue d'entrée (2) seulement dans le premier sens de rotation.

10. Montre à remontage automatique, **caractérisée en ce qu'**elle comprend un inverseur d'horlogerie (1) selon l'une quelconque des revendications précédentes.

11. Montre selon la revendication 10, **caractérisée en ce qu'**elle comprend un rouage (5, 6) d'entraînement des première et deuxième roues d'entrée (2, 3) en rotation dans des sens contraires.

## Patentansprüche

1. Wendegetriebe für eine Uhr, umfassend:
- Ein erstes Eingangsrad (2), drehbar um eine Drehachse (X-X'), in einer ersten Drehrichtung und in einer zweiten Drehrichtung entgegengesetzt zu der ersten Drehrichtung,
- Mindestens einen ersten Satellitentrieb (18), welcher von dem ersten Eingangsrad (2) getragen ist,
- Ein Ausgangdrehteil (7), umfassend ein erstes Sperrrad (20) mit dem der erste Satellitentrieb (18) ein Gesperr bildet, um das Ausgangdrehteil (7) in Bezug auf das erste Eingangsrad (2) nur in der ersten Drehrichtung der ersten und der zweiten Drehrichtungen zu sperren,
**dadurch gekennzeichnet, dass** es umfasst:
- Ein zweites Eingangsrad (3), welches die gleiche Drehachse (X-X') wie das erste Eingangsrad (2) und wie das Ausgangdrehteil (7) hat, und
- Mindestens einen zweiten Satellitentrieb (12) und ein zweites Sperrrad (14), welche zusammen ein Gesperr bilden, um das Ausgangdrehteil (7) in Bezug auf das zweite Eingangsrad (3) nur in der ersten Drehrichtung der ersten und zweiten Drehrichtungen zu sperren.

2. Wendegetriebe für eine Uhr gemäss Anspruch 1, **dadurch gekennzeichnet, dass** das zweite Eingangsrad (3) den zweiten Satellitentrieb (12) trägt, wobei das Ausgangdrehteil (7) das zweite Gesperr (14) umfasst, das mit dem ersten Gesperr (20) gekoppelt ist.

3. Wendegetriebe für eine Uhr gemäss einem der vorhergehenden Ansprüche, **dadurch gekennzeichnet, dass** das erste (2) und das zweite Eingangsrad (3) an dem Ausgangdrehteil (7) drehbar befestigt sind.

4. Wendegetriebe für eine Uhr gemäss Anspruch 3, **dadurch gekennzeichnet, dass** das Ausgangdrehteil (7) mindestens eine Halteschulter (26) aufweist, wobei die Halteschulter (26) und das erste Gesperr (20) zwischen sich das erste Eingangsrad (2) axial halten.

5. Wendegetriebe für eine Uhr gemäss Anspruch 4, **dadurch gekennzeichnet, dass** das Ausgangdrehteil (7) eine Montagewelle (16) und mindestens einen Montagering (23) umfasst, welcher auf der Montagewelle (16) aufgesteckt ist und welcher das erste Gesperr (20) stützt, so dass das erste Gesperr (20) mit der Montagewelle (16) verbunden ist, das erste Eingangsrad (2) drehbar an dem Montagering (23) befestigt ist, welcher die Halteschulter (26) aufweist.

6. Wendegetriebe für eine Uhr gemäss einem der Ansprüche 3 bis 5, **dadurch gekennzeichnet, dass** das Ausgangdrehteil (7) eine Montagewelle (16) umfasst, auf der mindestens das erste Eingangsrad (2), das zweite Eingangsrad (3) und das erste Gesperr (20) aufgesteckt sind.

7. Wendegetriebe für eine Uhr gemäss einem der vorhergehenden Ansprüche, **dadurch gekennzeichnet, dass** der erste und zweite Satellitentrieb (12, 18) zwischen dem ersten Eingangsrad (2) und dem zweiten Eingangsrad (3) angeordnet sind.

8. Wendegetriebe für eine Uhr gemäss Anspruch 7, **dadurch gekennzeichnet, dass** es eine Trennplatte (24) umfasst, welche zwischen einer Kreisbahn des ersten Satellitentriebs (18) und einer Kreisbahn des zweiten Satellitentriebs (12) angeordnet ist.

9. Wendegetriebe für eine Uhr gemäss einem der vorhergehenden Ansprüche, **dadurch gekennzeichnet, dass** es eine Vielzahl von ersten Satellitentrieben (18) umfasst, welche eingerichtet sind, um mit dem ersten Gesperr (20) zusammen zu wirken, so dass Drehung des Ausgangdrehteils (7) in Bezug auf das erste Eingangsrad (2) nur in der ersten Drehrichtung gesperrt ist.

10. Uhr mit Automatikaufzug, **dadurch gekennzeichnet, dass** sie ein Wendegetriebe für eine Uhr (1) gemäss einem der vorhergehenden Ansprüche umfasst.

11. Uhr gemäss Anspruch 10, **dadurch gekennzeichnet, dass** sie ein Räderwerk (5, 6) zum Drehen der ersten und zweiten Eingangsräder (2, 3) in entgegengesetzte Richtungen aufweist.

## Claims

1. Reverser for a timepiece, comprising :
- a first input wheel (2), rotational about an axis of rotation (X-X'), in a first direction of rotation and in a second direction of rotation opposite to the first direction of rotation,
- at least one first satellite pinion (18) carried by the first input wheel (2),
- an output mobile piece (7) comprising a first ratchet (20) with which the first satellite pinion (18) forms a click locking in rotation the output mobile piece (7) with respect to the first input wheel (2) only in the first direction of rotation from among the first and second directions of rotation,
**characterised in that** it comprises:
- a second input wheel (3) which has the same axis of rotation (X-X') as the first input wheel (2) and as the output mobile piece (7), and
- at least one second satellite pinion (12) and a second ratchet (14) which form together a click locking in rotation the output mobile piece (7) with respect to the second input wheel (3) only in the first direction of rotation from among the first and second directions of rotation.

2. Reverser for a timepiece according to claim 1, **characterized in that** the second input wheel (3) carries the second satellite pinion (12), the output mobile piece (7) comprising the second ratchet (14) which is coupled to the first ratchet (20).

3. Reverser for a timepiece according to any one of the preceding claims, **characterized in that** the first (2) and the second input wheel (3) are mounted in a rotating way on the output mobile piece (7).

4. Reverser for a timepiece according to claim 3, **characterized in that** the output mobile piece (7) comprises at least one retaining shoulder (26), this retaining shoulder (26) and the first ratchet (20) retaining axially the first input wheel (2) between them.

5. Reverser for a timepiece according to claim 4, **characterized in that** the output mobile piece (7) comprises an assembling shaft (16) and at least one assembling ring (23) which is slipped on this assembling shaft (16) and which supports the first ratchet (20) in a way so as to couple this first ratchet (20) to the assembling shaft (16), the first input wheel (2) being mounted in a rotating way on the assembling ring (23) which comprises the retaining shoulder (26).

6. Reverser for a timepiece according to any one of the claims 3 to 5, **characterized in that** the output mobile piece (7) comprises an assembling shaft (16) on which at least the first input wheel (2), the second input wheel (3) and the first ratchet (20) are slipped on.

7. Reverser for a timepiece according to any one of the preceding claims, **characterized in that** the first and second satellite pinions (12, 18) are located between the first input wheel (2) and the second input wheel (3).

8. Reverser for a timepiece according to claim 7, **characterized in that** it comprises a separation plate (24) located between a circular path of the first satellite pinion (18) and a circular path of the second satellite pinion (12).

9. Reverser for a timepiece according to any one of the preceding claims, **characterized in that** it comprises a plurality of first satellite pinions (18) able to co-operate with the first ratchet (20) in a way so as to lock in rotation the output mobile piece (7) with respect to the first input wheel (2) only in the first direction of rotation.

10. Self-winding watch, **characterized in that** it comprises a reverser for a timepiece (1) according to any one of the preceding claims.

11. Watch according to claim 10, **characterized in that** it comprises a gear train (5, 6) for driving the first and second input wheels (2, 3) in rotation in opposite directions.
